Europäisches Patentamt

European Patent Office

Office européen des brevets

(11) Veröffentlichungsnummer: **0 218 213 B1**

# EUROPÄISCHE PATENTSCHRIFT

(45) Veröffentlichungstag der Patentschrift: **18.12.91**

(21) Anmeldenummer: **86113685.1**

(22) Anmeldetag: **03.10.86**

(51) Int. Cl.⁵: **G01N 21/55**, G01J 1/16, G01N 21/89, G01B 11/06, G01N 21/27, G01N 21/59

(54) **Verfahren und Vorrichtung zur on-line-Messung von Transmission oder Reflexion an bewegten Objekten im Bereich detektierbarer elektromagnetischer Strahlung.**

(30) Priorität: **04.10.85 DE 3535515**

(43) Veröffentlichungstag der Anmeldung:
**15.04.87 Patentblatt 87/16**

(45) Bekanntmachung des Hinweises auf die Patenterteilung:
**18.12.91 Patentblatt 91/51**

(84) Benannte Vertragsstaaten:
**BE CH FR GB IT LI NL SE**

(56) Entgegenhaltungen:
**EP-A- 0 107 410**
**GB-A- 1 013 740**
**GB-A- 2 102 567**
**US-A- 4 188 533**
**US-A- 4 281 897**

(73) Patentinhaber: **Sympatec GmbH System-Partikel-Technik**
**Burgstätter Strasse 6**
**W-3392 Clausthal-Zellerfeld(DE)**

(72) Erfinder: **Witt, Wolfgang F., Dr.**
**Am Silbersegen 1**
**W-3392 Clausthal-Zellerfeld(DE)**

(74) Vertreter: **Behrens, Dieter, Dr.-Ing. et al**
**Wuesthoff & Wuesthoff Patent- und Rechtsanwälte Schweigerstrasse 2**
**W-8000 München 90(DE)**

**Beschreibung**

Die Erfindung betrifft ein Transmissions- und/oder Reflexions-Meßverfahren und -gerät, insbes. zur automatischen Endkontrolle oder Qualitätsprüfung von vakuumbeschichteten Scheiben (Flachglas) oder ähnlichen Substraten hinsichtlich der Gleichmäßigkeit aufgetragener dünner Schichten (Beschichtungen) und der Einhaltung vorgegebener Transmissions- und Reflexionstoleranzen für festgelegte Wellenlängen bzw. verschiedene Farben.

Zur Erzielung vorgegebener optischer Eigenschaften, z.B. der Vergütung von Glasscheiben, werden auf Grundkörper geeignete Materialien in dünnen Schichten aufgebracht. Die Kontrolle der erreichten Transmissions- oder Reflexionseigenschaften erfolgt üblicherweise lokal begrenzt und, meist stichprobenweise, off-line. Dazu werden in der Regel vorbereitete Proben oder Prüfkörper des zu charakterisierenden oder zu prüfenden Materials in das Meßvolumen von Labor-Photometern gebracht. Diese Photometer bestehen aus optischen Anordnungen mit einer Lichtquelle, die den erforderlichen Wellenlängenbereich abdeckt, Linsen zur Meßstrahlbündelung und -richtung, einem Chopper, z.B. einer Chopperscheibe, gegebenenfalls einem Strahlenteiler im Meßstrahlengang hinter der Prüfkörperposition zur Teilung des Meßstrahls, Filtern oder optischen Gittern zur Ausfilterung einer vorbestimmten Meßlichtwellenlänge hinter dem Prüfkörper, Detektoren zur Erzeugung eines der Intensität des Meßstrahls proportionalen Meßsignals, und Detektorverstärkern zur Verstärkung des Meßsignals der Detektoren und aus einer Schaltung zur anschließenden analogen Signalauswertung.

Zur Erhöhung der Genauigkeit wird häufig ein zweiter Strahlengang verwendet, der zum Intensitätsvergleich herangezogen wird. Dabei sind Verfahren bekannt, bei denen dieser Referenzstrahl durch Strahlteilung aus dem Primärlichtstrahl gewonnen wird, wodurch sich der Einfluß der Schwankungen der Lichtquelle reduzieren läßt. Zur Verringerung von Linearitätsfehlern kann zusätzlich, z.B. durch Veränderung der Aperatur, eine Intensitätsanpassung dieses Strahlenganges vorgenommen werden, wobei eine definierbare Anpassung, z.B. durch das Zeit-Divisions-Verfahren, den Dynamikbereich vergrößert und Präzisionsanwendungen auch bei optisch dichten Medien ermöglicht (US-Patentschrift 4,281,897). Diese Verfahren haben den Nachteil, daß der Referenzstrahl durch eine gegen das Umgebungslicht geschützte Optik um das Meßobjekt herumgeführt werden muß. Sie sind daher für ausgedehnte Objekte (Fensterscheiben) wenig geeignet.

Verfahren, die den Referenzstrahl aus einer zweiten Lichtquelle herleiten, vermeiden diese Einschränkung (britische Patentschrift 1,013,740). Insbesondere lassen sich hierdurch kurzzeitige Schwankungen der Detektorempfindlichkeit weitgehend eliminieren. Die Langzeitstabilität ist jedoch nur gegeben, wenn sich beide Lichtquellen zeitlich gleich entwicklen. Dieses ist häufig nicht der Fall.

Bisherige Konstruktionen berücksichtigen nicht die Beeinträchtigung der Meßsignale durch Vibrationen, als Folge der Bewegung der Prüflinge sowie Wechsellichtbeiträge, die durch künstliche Beleuchtungskörper außerhalb des Meßsystems herrühren.

Der Einsatz solcher Photometer zur on-line-Kontrolle von Transmissionen oder Reflexionen an bewegten Objekten ist bisher nicht möglich.

Messungen an Randzonen der zu prüfenden Proben oder Prüfkörper sind ausgeschlossen. Die lokalen Auflösungen in ausgedehnten Meßzonen sind nur gering. Die Genauigkeit der Messung wird wegen der üblicherweise verwendeten Wechselspannungsverstärker durch die Stabilität der Chopper-Frequenz festgelegt. Diese Stabilitätsanforderung ist unter industriellen Betriebsbedingungen nur schwer zu erfüllen.

Weitere Einschränkungen für konventionelle Photometer ergeben sich im Produktionsprozeß durch unvermeidliche Verschmutzungen, die die optischen Bauelemente bedroht, durch Drift als Folge äußerer Einflüsse, wie z.B. Temperatur- und Spannungsschwankungen etc., sowie Alterungserscheinungen von Lampen, Detektoren und anderen Bauelementen.

Der Erfindung liegt die Aufgabe zugrunde, die photometrische Messung der Transmission von oder Reflexion an Prüfkörpern oder Meßobjekten, insbes. beschichteten Gläsern oder Substraten, im Bereich detektierbarer, elektromagnetischer Strahlung, insbes. Licht, zur Bestimmung oder Qualitätskontrolle der zu prüfenden Proben verfahrens- und vorrichtungsgemäß so auszugestalten, daß sie unter Produktionsbedingungen im on-line-Betrieb an bewegten Objekten langzeitlich zuverlässig einsetzbar wird.

Ein Verfahren und eine Vorrichtung (Photometer), die diese Aufgabe lösen, sind mit ihren Ausgestaltungen in den Patentansprüchen gekennzeichnet und anhand eines Ausführungsbeispiels näher erläutert.

Das Verfahren und das Photometer nach der Erfindung sind im on-line-Betrieb in der Lage, die erforderlichen Messungen am bewegten Objekt schnell auszuführen, unabhängig von Schwankungen der Chopper-Frequenz zuverlässig zu detektieren, alle eventuellen Störparameter wie Streustrahlung (Restlicht), Drift einschließlich Alterung und/oder kontinuierliche Verschmutzung zu eliminieren, am bewegten Objekt die Bregrenzungen selbständig zu erkennen, um den Meßvorgang abzugrenzen, sowie auf die Begrenzungen bezogene Meßpositionen automatisch auszuarbeiten.

Die erzeugten Meßsignale werden unmittelbar am Ausgang jedes Detektorverstärkers durch schnelle Analog-Digital-Wandlung numerisch erfaßt und anschließend ausschließlich digital durch Spitzenwerterfassung kombiniert mit Mittelung jeweils innerhalb von wenigstens zwei Chopperperioden zu einem Transmissions- oder Reflexionsmeßwert zweistufig weiterverarbeitet. Als Referenz für die Verhältnisbildung (die Transmission und die Reflexion sind Verhältniszahlen) dient der in einer vorhergehenden Chopperperiode gemessene Absolutwert der Lichtintensität am Detektor. Die numerische Mittelung des Meßsignals erfolgt in an sich bekannter Weise, so daß die tatsächlichen Meßwerte $J(t_i)$ ersetzt werden durch gemittelte Meßwerte $J^*(t_i)$ entsprechend

$$J^*(T_i) = \frac{1}{2k+1} \sum_{j=-k}^{k} J(t_{i+j}) \qquad (1)$$

Die Anzahl der bei der Mittelung jeweils einbezogenen Meßpunkte k wird über die Meßfrequenz f aus der minimalen Plateaubreite b so bestimmt, daß die Anzahl k der in die Mittelung einbezogenen Meßwerte weniger oder allenfalls die Hälfte der Plateaubreite b besetzen. Dadurch wird sichergestellt, daß bei trapezförmigen Detektorsignalen (als Folge der üblichen Ausgestaltung der Chopperscheibe) die Höhenlage des Plateaus bei wenigstens einem Wert richtig nachgebildet wird und Störungen gleichzeitig mit dem Dämpfungsfaktor D

$$D = \frac{1}{2k+1} \qquad (2)$$

abgeschwächt werden.

Zur angestrebten Spitzenwerterfassung wird diese Methode auf wenigstens eine Chopperperiode $1/f_c$ angewendet, so daß unabhängig vom zeitlichen Startpunkt das Maximum und das Minimum eindeutig erfaßbar werden. Die Differenz aus Maximum und Minimum liefert die gesuchte Intensitätsdifferenz $\Delta J$.

Die Meßfrequenz f (Wiederholungsrate der Messungen) wird daher im günstigsten Fall die Chopperfrequenz $f_c$ erreichen. Dabei sind Schwankungen $\Delta f_c$ der Chopperfrequenz ohne Einfluß auf das Meßergebnis, solange die tatsächliche Chopperfrequenz $(f_c + \Delta f_c)$ unterhalb der Frequenz bleibt, bei der $(2k+1)$ Meßpunkte gerade die Hälfte der Plateaubreite ausmachen.

Das Verfahren zur numerischen Bestimmung der Transmission T arbeitet zweistufig. In der ersten Stufe werden im gechoppten, freien Strahlengang (kein Meßobjekt vorhanden) die aktuelle Choppfrequenz $f_c$ bestimmt, die zugehörige Meßzeit $T_{mess} > T_{chopp} + \Delta T_{chopp}$ sowie die Breite der Hell/Dunkel-Plateaus b gemessen und daraus das Mittelungsintervall als die Anzahl der bei der Mittelung einzubeziehenden Meßpunkte k hergeleitet und anschließend mit der Mittelwertbildung die Spitzenwerterfassung zur Bestimmung der ungeschwächten Intensität $I_o = \Delta J_o$ als Normierungsgröße abgeschlossen.

In der zweiten Stufe befindet sich das Meßobjekt im Strahlengang, so daß nach analoger Durchführung der mittelnden Spitzenwertbestimmung die durch die Probe geschwächte Intensität $I = \Delta J$ bestimmt wird und mit der aus der ersten Stufe bekannten Normierungsgröße $I_o$ die gesuchte Transmission $T = I/I_o$ digital berechnet wird.

In beiden Stufen wird quasikontinuierlich gemessen. Die automatische Umschaltung von der ersten Stufe in die zweite Stufe kann erfolgen, wenn die aus zwei aufeinanderfolgenden Werten berechnete Transmission $T_i$ (oder Reflexion)

$$T_i = \frac{I_i}{I_{i-1}} \qquad (3)$$

einen voreingestellten Schwellwert $T_s$ unterschreitet. Die in der zweiten Stufe gemessenen Intensitäten $I_{i+n}$ -

(n>0) werden danach zur Berechnung der Transmission $T_{i+n}$ auf eine mit Sicherheit ungestörte Intensität $I_{i-m}$ (m>0) der ersten Stufe normiert.

Die automatische Rückschaltung von der zweiten Stufe in die erste Stufe kann entsprechend erfolgen, wenn der voreingestellte Schwellwert $T_s$ überschritten wird.

Die Erfindung erlaubt schnelle Messungen auch in Randzonen der Prüfkörper und erreicht hohe Auflösungen in ausgedehnten Meßzonen, wobei die Chopperperiode keinen besonderen Stabilitätsanforderungen genügen muß. Dabei kann vor jeder Messung eine Kalibrierung vorgenommen werden und können Ränder (oder Höhen) von Prüfkörpern, z.B. zur automatischen Festlegung von Meßpositionen, erkannt werden. Wegen der hohen Meßgeschwindigkeit sind Transportgeschwindigkeiten der Prüfkörper bis zu 40 m/min bei 5 cm Prüfkörperabstand möglich. Es lassen sich platzsparende Doppeldetektoren mit den Standardwellenlängen 550 nm (grün), 660 nm (rot) und 2000 nm (infrarot) verwenden. Eine Streulichtkompensation ist möglich.

Mit der Erfindung läßt sich die Lichtdurchlässigkeit (Transmission) für Licht verschiedener Farben (Wellenlängen) an mehreren Stellen einer Scheibe schnell on-line bestimmen, so daß diese Werte auf Einhaltung vorgebbarer Toleranzen überprüft werden können. Die Messung kann mit automatischer Begrenzungs- oder Randerkennung auch kontinuierlich an besonders schnell bewegten, aufeinanderfolgenden Scheiben on-line erfolgen.

Die elektrisch gewonnenen Meßergebnisse können auf einem Bildschirm als Zahlwerte innerhalb der schematisierten Scheibenkonturen an den jeweiligen Meßorten (unten, Mitte, oben) dargestellt werden. Die Größenverhältnisse der Scheiben und die zugehörigen Meßpositionen können so reproduziert sein, daß für den Benutzer die Zuordnung der Meßwerte zu den Meßobjekten unmittelbar gegeben ist.

Die gemessenen Werte können kommentiert mit ergänzenden Informationen über Glastyp, Charge, Datum, Uhrzeit, etc., auf einen Protokolldruck ausgegeben werden.

Ein Ausführungsbeispiel der Erfindung ist mit weiteren Ausgestaltungen anhand einer Zeichnung näher erläutert, in der zeigt:

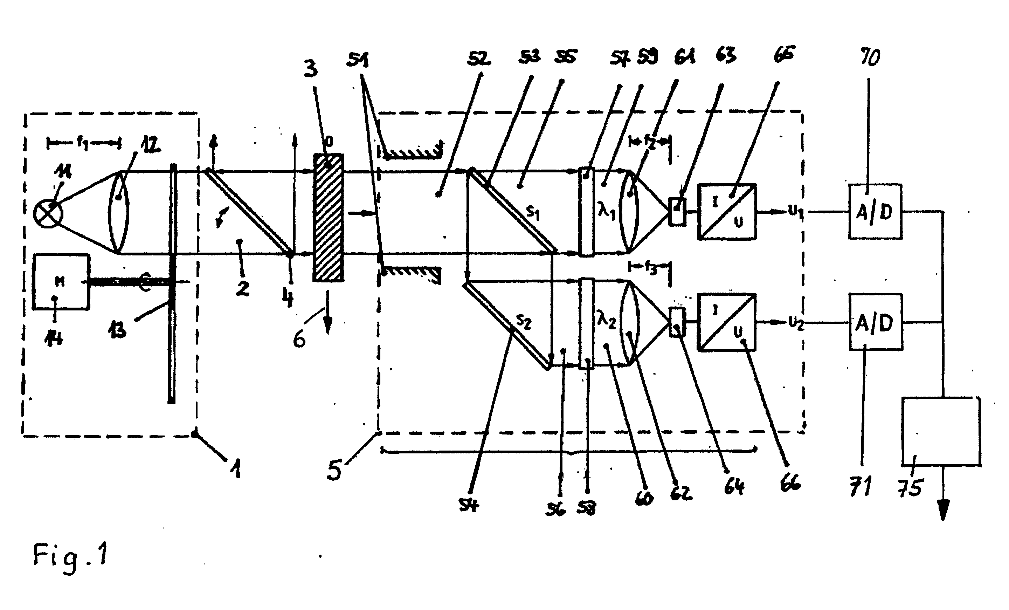

Fig. 1      eine schematische Darstellung eines erfindungsgemäßen Meßgeräts und

Fig. 2      ein Zeit-Intensitäts-Diagramm des an der Detektoreinheit anstehenden Meßsignals.

Das Meßgerät umfaßt eine Lichtquelleneinheit 1 und eine Detektoreinheit 5 zur Ausmessung eines zwischen sie in den Meßlichtstrahl 2 eingebrachten Prüfkörpers oder Meßobjekts 3. Gelangt ein Prüfkörper 3, z.B. eine Glasscheibe, in Richtung des Pfeils 6 in den Meßlichtstrahl 2 zwischen Lichtquelleneinheit 1 und Detektoreinheit 5 wird die Intensität des Lichts vom Ausgangswert $I_0$ auf den Wert I geschwächt. Gemessen wird die über $T = I/I_0$ definierte Transmission der Glasscheibe für verschiedene Wellenlängen $\lambda$. Als Lichtquelle dient die 6V, 6W Glühlampe 11. Sie kann in bestimmten Fällen durch eine Laser-Lichtquelle zu ersetzen sein. Sie wird mit 5V±0,01V Gleichspannung versorgt. Durch den Betrieb mit Unterspannung wird zum einen die Lebensdauer der Glühlampe verlängert, zum anderen das Maximum der spektralen Verteilung der Glühlampe 11 weiter zum Infraroten hin verschoben. Das Licht der Glühlampe 11 wird mit einer bikonvexen Sammellinse 12 mit einer Brennweite $f_1 = 40$ mm parallel auf die Eintrittsöffnung einer Detektoreinheit 5 gerichtet. Dabei wird es durch eine zweiflügelige, rotierende Chopperscheibe 13 periodisch unterbrochen. Diese Chopperscheibe 13 wird durch einen Gleichstrommotor 14 in Rotation versetzt und dreht sich mit ca. 25 $s^{-1}$. Die Drehzahl wird unter Verwendung eines Motorregler-IC's, z.B. TDA1559, stabilisiert. Der aus der Lichtquelle 1 austretende Meßlichtstrahl 2 wird somit periodisch mit ca. 50 Hz gechoppt.

In der gezeigten Anordnung durchdringt der gechoppte Meßlichtstrahl 2 den Prüfkörper 3 und gelangt zur Transmissionsmessung in die Detektoreinheit 5. Zur Reflexionsmessung passiert der Meßlichtstrahl 2 vor dem Prüfkörper zunächst einen in den und aus dem Strahlengang schwenkbaren zusätzlichen Spiegel 4, wird dann am Prüfkörper 3 reflektiert und gelangt dann durch Reflexion am Spiegel 4 zu einer anderen, nicht dargestellten, mit der Detektoreinheit 5 identischen Detektoreinheit.

Zur Reduzierung von Streulichteinflüssen auf den das Meßsignal enthaltenden Durchlichtmeßstrahl 52 ist eingangsseitig ein Lichtschutztubus 51 vorgesehen. Der vom Prüfkörper 3 kommende Durchlichtmeßstrahl 52 gelangt nach Durchtritt durch den Lichtschutztubus 51 auf einen weiteren unter 45° zur Strahlrichtung angeordneten Strahlteiler 53. Der abgelenkte Teil des Durchlichtmeßstrahls 56 trifft auf einen weiteren, ebenfalls unter 45° zur Strahlrichtung angeordneten Spiegel 54. Der Strahlteiler 53 ist dabei eine Strahlteilerplatte mit einem Intensitätsteilungsverhältnis von 50:50 zwischen Transmission und Reflexion. Der Spiegel 54 ist ein total reflektierender Vorderflächen-Planspiegel. Die den Strahlenteiler 53 und den Spiegel 54 verlassenden Meßlichtstrahlen 55 und 56 gelangen danach je auf ein Interferenzfilter 57 und 58, die nur gefilterte Durchlichtstrahlen 59 und 60 der gewünschten Wellenlänge $\lambda_1$ und $\lambda_2$ passieren lassen. Diese einfarbigen Durchlichtmeßstrahlen 59 und 60 werden mittels weiteren bikonvexen Sammellinsen 61 und 62 auf die aktiven Flächen von Sensoren bzw. Detektoren 63 und 64 fokussiert. Die Sammellinsen 61 und 62 weisen für die Wellenlängen $\lambda_1$ und $\lambda_2$ die Brennweiten $f_2$ und $f_3$ auf. Den Detektoren 63 und 64 unmittelbar nachgeschaltet sind Strom-Spannungswandler als Detektorverstärker 65 und 66, die auf die Detektoren 63 und 64 eingestrahlten Intensitäten proportionale Ströme in genormte Spannungen $U_1$ und $U_2$ (0... + 10V) liefern. Sie bestehen aus zweistufigen, gleichspannungsmäßig gekoppelten Verstärkerstufen auf Basis eines Operationsverstärkers, z.B. AD547JH. Durch die Aufteilung des aus dem Prüfkörper 3 austretenden Durchlichtmeßstrahls 52 in zwei monochrome Durchlichtmeßstrahlen 59 und 60 können vom selben Meßort aus zwei Messungen mit unterschiedlicher Wellenlänge durchgeführt werden. Die Aufteilung dieses Meßstrahls 52 kann auch in n weitere Meßstrahlen erfolgen, die jeweils durch ein Filter anderer Wellenlänge auf einen Detektor fallen, so daß auch eine räumliche Prüfung der Beschichtung des Prüfkörpers am Meßort erfolgen kann, weil die Beobachtungs- und Abbildungspunkte der einzelnen Lichtfrequenzen unterschiedliche Abstände von den Abbildungslinsen 61, 62 haben.

Für die Wellenlängen $\lambda_1$, $\lambda_2$ im Bereich des sichtbaren Lichtes werden Silicium-Photodioden als Detektoren 63 und 64 verwendet (z.B. Type 0SD 15-5T). Für $\lambda_1$ im nahen Infrarot ($\lambda_1 = 2000$ nm) wird ein InAs-Detektor (Indium-Arsenid-Photodiode) verwendet (z.B. Type J12-5, 2 mm). Zusätzlich wird eine beidseitig polierte, 3 mm starke Si(111)-Scheibe als Strahlteilerplatte 53 eingesetzt, die für $\lambda_1 = 2000$ nm hohe Transmission, für sichtbares Licht jedoch hohe Reflexion aufweist. Diese Anordnung erlaubt gleichzeitig zur Messung im sichtbaren Lichtbereich eine sehr schnelle Messung im Infrarotlichtbereich.

Jedem Detektorverstärker 65 und 66 ist ein Analog-Digital-Wandler 70 bzw. 71 unmittelbar nachgeordnet, der das an dessen Ausgang anstehende analoge Meßsignal in ein digitalisiertes Meßsignal umwandelt. An die A/D-Wandler 70 und 71 ist ein Prozeßrechner 75 angeschlossen, der aus den digitalisierten Meßwerten die gesuchte Transmission oder Reflexion nach dem erfindungsgemäßen Verfahren ermittelt.

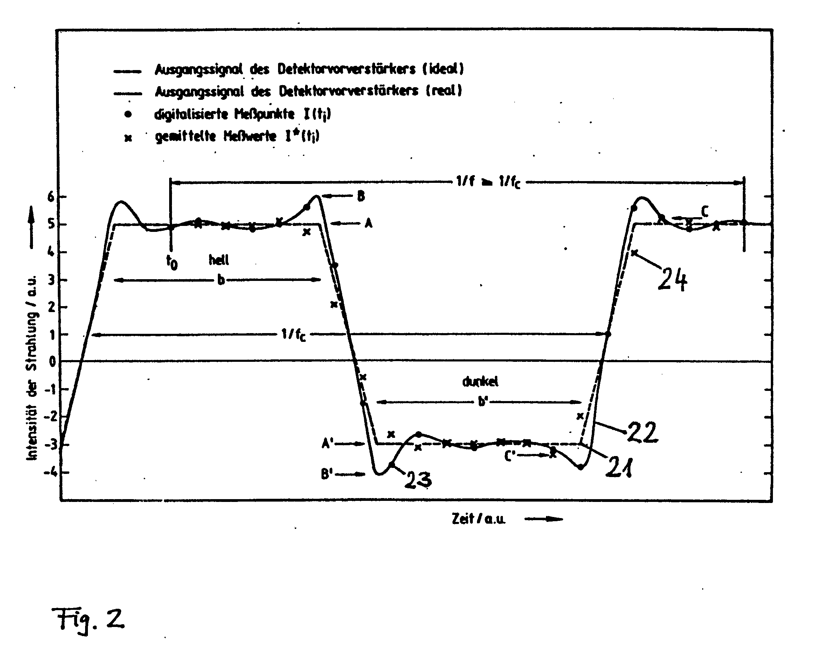

Der zeitliche Verlauf der Meß- bzw. Ausgangsspannung $U_1$ des Detektorverstärkers 65, der wegen desr Chopperscheibe 13 trapezförmig und dessen Amplitude der um den Restlichtanteil korrigierten Intensität entspricht, ist schematisch in Fig. 2 dargestellt. Da sich das Restlicht sowohl während der Dunkel- als auch der Hellphase der Chopperscheibe 13 in gleicher Weise zum Meßsignal addiert, wird die Amplitude (d.h. die Differenz zwischen oberem und unterem Plateau) nicht verändert. Die minimale Meßzeit ist somit im wesentlichen durch die Chopperfrequenz vorgegeben und beträgt bei 50 Hz nur 20 ms.

Die gestrichelte Linie 21 in Fig. 2 zeigt den idealisierten Verlauf, wie er sich innerhalb einer Chopperperiode $1/f_c$ darstellt, wenn die Öffnungen der Chopperscheibe groß gegenüber der Apertur der bikonvexen Sammellinse 12 sind. Die durchgezogene Linie 22 gibt ein mögliches reales Meßsignal wieder, das gegenüber dem idealisierten Verlauf der Linie 21 zur Verdeutlichung des Verfahrens mit starken Verzerrungen gezeichnet wurde. Die von der Glühlampe 11 herrührende Intensität $I(\lambda_1)$ berechnet sich aus der Differenz der Intensitäten zwischen Hell- und Dunkelphase, also idealisiert aus A-A'. Um den Werten A und A' bei realem Signal möglichst nahezukommen, wird das Meßsignal beginnend zum Zeitpunkt $t_o$ mit konstanter Abtastfrequenz $f_a$ digitalisiert (Punkte 23). Dann werden innerhalb der Meßperiode 1/f die größer oder bestenfalls gleich der Chopperperiode $1/f_c$ ist, diese Meßwerte $I(t_i)$ durch Mittelwerte $J^*(t_i)$ ersetzt (Kreuze 24, dargestellt für Mittelung über 3 benachbarte Punkte, d.h. k = 1). Die Mittelwertbildung erfolgt gemäß Gleichung (1)

$$J^*(T_i) = \frac{1}{2k+1} \sum_{j=-k}^{k} J(t_{i+j}) \tag{1}$$

d.h. jeweils k Meßpunkte links und rechts des zu bearbeitenden Meßpunktes werden in die Mittelung mit einbezogen. k wird dabei in einer Vorlaufphase aus dem Meßsignal so bestimmt, daß 2k + 1 Meßpunkte sicher weniger als die Hälfte der Plateaubreiten b und b' ausmachen. Dadurch wird gewährleistet, daß unabhängig von $t_o$ bei $f < f_c$ grundsätzlich wenigstens einmal 2k + 1 Meßpunkte auf dem oberen (hellen) und dem unteren (dunklen) Plateau zu liegen kommen.

Die von der Glühlampe 11 herrührende Intensität $I(\lambda_1)$ berechnet sich danach näherungsweise durch Spitzenwertbestimmung aus max(I*)-min(I*) = C-C'. Durch das geschilderte Mittelungsverfahren werden die Störeinflüsse wenigstens mit dem Dämpfungsfaktor D = 1/(2k + 1) (Gleichung 2) unterdrückt. Die Differenz der realen Spitzenwerte B-B' weicht dagegen wesentlich stärker von dem idealen Wert A-A' ab. Schwankungen der Chopperfrequenz $f_c$ bleiben so lange ohne Wirkung, wie $f < f_c$ gilt und 2k + 1 Meßpunkte immer noch auf wenigstens die Hälfte des Plateaus zu liegenkommen.

Das Verfahren zur numerischen Bestimmung der Transmission T (oder Reflexion) arbeitet zweistufig. In der ersten Stufe wird im gechoppten, freien Strahlengang (kein Meßobjekt vorhanden) das Meßgerät kalibriert. Es wird dabei die Meßperiode 1/f, das Mittelungsintervall 2k + 1 sowie die Intensität $I_o$ entsprechend 100 % Transmission bestimmt. Hierzu wird das Ausgangssignal der Detektorverstärker 65, 66 mit der Abtastfrequenz $f_a$ über einen Zeitraum digitalisiert, der mit Sicherheit größer als die Chopperperiode ist. Dann werden aus diesen Meßwerten Maximum $J_{max}$ und Minimum $J_{min}$ bestimmt. Daraus wird der Mittelwert $J_M = (J_{max} + J_{min})/2$ gebildet. Das Signal schwankt somit periodisch um diesen Mittelwert. Die Chopperfrequenz $f_c$ wird aus einer Anzahl n der mit konstanter Abtastfrequenz $f_a$ digitalisierten Meßpunkte derart bestimmt, daß die Zählung der Punkte zu dem Zeitpunkt beginnt, zu dem der Mittelwert $J_M$ erstmalig überschritten wird, und die Zählung dann abgeschlossen wird, wenn nach Unterschreitung des Mittelwertes eine erneute Überschreitung erfolgt ist. Es gilt $f_c < f_a/n$. Entsprechend lassen sich die Plateaubreiten b und b' und daraus k bestimmen. Die Meßfrequenz f wird so gewählt, daß, auch bei zu erwartenden Schwankungen von $f_c$, f grundsätzlich kleiner $f_c$ ist. Analog wird bei der Berechnung von k verfahren. Somit liegen alle Größen zur numerischen Bestimmung des $I_o$-Wertes mittels der zuvor beschriebenen Spitzenwertbestimmung in Verbindung mit der Mittelung fest und $I_o$ kann bestimmt werden.

In der zweiten Stufe befindet sich das Meßobjekt 3 im Strahlengang, so daß nach Spitzenwertbestimmung mit Mittelung nunmehr die geschwächte Intensität I mit f bestimmt werden kann. Zusammen mit der zuvor bestimmten Normierungsgröße $I_o$ kann daraus die gesuchte Transmission $T = I/I_o$ digital berechnet werden.

In beiden Stufen wird quasi-kontinuierlich gemessen. Die automatische Umschaltung von der ersten Stufe zur zweiten Stufe erfolgt, wenn ein Meßobjekt 3 in den Meßlichtstrahl 2 eingebracht wird. Die Rückschaltung erfolgt, wenn das Meßobjekt den Meßlichtstrahl verläßt. Ohne Meßobjekt im Meßlichtstrahl kalibriert sich das Meßgerät also ständig neu. Mit Meßobjekt im Meßlichtstrahl werden kontinuierlich Transmissionen bestimmt und gespeichert. Bei konstanter Geschwindigkeit des Meßobjektes wird somit die Transmission an äquidistanten Meßpositionen auf diesem, z.B. einer Scheibe, gemessen.

Die Erkennung, ob sich ein Meßobjekt im Strahlengang befindet, erfolgt entweder durch einen kapazitiven Näherungsschalter, der so angebracht ist, daß er zu genau dem Zeitpunkt das Meßobjekt 3 meldet, an dem sich dieses im optischen Strahlengang befindet, oder aber durch die Meßanordnung selbst.

Im letzten Fall werden Quotienten $T_i = I_i/I_{i-1}$ aus aufeinanderfolgenden Intensitäten $I_i$, $I_{i-1}$ kontinuierlich bestimmt. Unterschreiten $T_i$ einen vorgebbaren Schwellwert $T_s$, so befindet sich ein Meßobjekt im Strahlengang. Die Transmissionen $T_{i+m}(M>0)$ werden mit einem Bezugswert $I_o$ berechnet, der soweit vor $I_i$ gemessen wurde, daß er mit Sicherheit noch nicht durch die Ränder des Meßobjekts beeinflußt wurde.

Der Rückschaltung erfolgt entsprechend, wenn die Transmission den vorgebbaren Schwellwert $T_s$ überschreitet. Während sich das Meßobjekt im Strahlengang befindet, können kontinuierlich alle Transmissionswerte abgespeichert werden. Wenn das Meßobjekt den Strahlengang verlassen hat, kann aus der Geschwindigkeit v des Meßobjektes und der Anzahl der Transmissionswerte sowie der Abtastfrequenz $f_a$ eine eindeutige örtliche Zuordnung der Transmissionswerte zu den Positionen auf dem Meßobjekt vorgenommen werden. Insbesondere lassen sich Transmissionen in vorgebbaren Bereichen (z.B. den Randbereichen) selektieren oder örtliche Mitterlwerte berechnen und auf die Einhaltung von Toleranzvorgaben überprüfen.

Für Anwendungen bei denen die Geschwindigkeit v z.B. chargenabhängig variiert, kann vorgesehen werden, daß v aus der Zeitdifferenz zwischen dem Ansprechen von zwei im Abstand d angebrachten kapazitiven Näherungsschaltern automatisch bestimmt wird.

## Patentansprüche

1. Verfahren zur photometrischen Messung der Transmission oder Reflexion im Bereich detektierbarer Strahlung an einem Prüfkörper oder Meßobjekt (3) zur Bestimmung optischer Eigenschaft mit einem Photometer aus optischen Anordnungen von Lichtquelle (11), Linsen (12,61,62), Chopperscheibe (13), Strahlenteiler (53), Filtern oder Gittern (57,58) sowie wenigstens einem Detektor (63,64) und Detektorverstärker (65,66),

dadurch **gekennzeichnet,**

daß das an jedem Detektorverstärker (65,66) anstehende Meßsignal unmittelbar an dessen Ausgang analog-digital gewandelt wird und danach ausschließlich digital durch numerische Spitzenwerterfassung in Verbindung mit Mittelwertbildung über wenigstens zwei Chopperperioden die zu messende Transmission oder Reflexion zweistufig bestimmt wird, wobei in der ersten Stufe bei noch nicht in den Meßstrahlengang eingebrachtem Prüfkörper (3) das Mittelungsintervall als die Anzahl der bei der Mittelung einzubeziehenden Meßpunkte bestimmt und anschließend an die Mittelwertbildung aller Meßpunkte die Spitzenwerterfassung der so gebildeten Mittelwerte zur Bestimmung der ungeschwächten Intensität als Normierungsgröße abgeschlossen wird, und in der zweiten Stufe bei in den Meßstrahlengang eingebrachtem Prüfkörper (3) aus der ebenso durchgeführten mittelnden Spitzenwerterfassung die geschwächte Intensität bestimmt und mit der in der ersten Stufe gewonnenen Normierungsgröße die zu bestimmende Transmission oder Reflexion durch Verhältnisbildung berechnet wird.

**2.** Vorrichtung zur photometrischen Messung von Transmission oder Reflexion im Bereich detektierbarer Strahlung an einem Prüfkörper oder Meßobjekt (3) zur Bestimmung oder Kontrolle dessen optischer Eigenschaft
mit einem Photometer aus optischen Anordnungen von Lichtquelle (11), Linsen, (12,61,62) Chopperscheibe (13), Strahlenteiler (53), Filtern oder Gittern (57,58) sowie wenigstens einem Detektor (63,64) und Detektorverstärker (65,66)
dadurch **gekennzeichnet,**
daß für jeden Detektorverstärker (65, 66) unmittelbar nachgeordnet ein Analog-Digital-Wandler (70, 71) vorgesehen ist und an diese ein Prozeßrechner (75) zur Bestimmung der Transmission oder Reflexion aus den digitalisierten Meßsignalen angeschlossen ist, der digital durch numerische Spitzenwerterfassung in Verbindung mit Mittelwertbildung über wenigstens zwei Chopperperioden die zu messende Transmission oder Reflexion zweistufig bestimmt, wobei in der ersten Stufe bei noch nicht in den Meßstrahlengang eingebrachtem Prüfkörper (3) das Mittelungsintervall als die Anzahl der bei der Mittelung einzubeziehenden Meßpunkte bestimmt und anschließend an die Mittelwertbildung aller Meßpunkte die Spitzenwerterfassung der so gebildeten Mittelwerte zur Bestimmung der ungeschwächten Intensität als Normierungsgröße abgeschlossen wird, und in der zweiten Stufe bei in den Meßstrahlengang eingebrachtem Prüfkörper (3) aus der ebenso durchgeführten mittelnden Spitzenwerterfassung die geschwächte Intensität bestimmt und mit der in der ersten Stufe gewonnenen Normierungsgröße die zu bestimmende Transmission oder Reflexion durch Verhältnisbildung berechnet wird.

**3.** Vorrichtung nach Anspruch 2,
dadurch **gekennzeichnet,**
daß der Meßstrahl (52) hinter dem Prüfkörper (3) in wenigstens einen weiteren Meßstrahl (50) unterteilt ist, der jeweils durch ein weiteres Filter (58) vorbestimmter Wellenlänge ($\lambda_2$) hindurch auf einen weiteren Detektor (64) mit unmittelbar nachgeordnetem Analog-Digital-Wandler (71) fällt, an den der Prozeßrechner (75) angeschlossen ist.

**4.** Vorrichtung nach Anspruch 2 oder 3,
dadurch **gekennzeichnet,**
daß zur Messung im Infrarotlichtbereich der Detektor (63) als Indium-Arsenid-Photodiode ausgebildet ist.

**5.** Vorrichtung nach Anspruch 4,
dadurch **gekennzeichnet,**
daß der im Meßstrahlengang vor dem Detektor (63) angeordnete Strahlenteiler (53) als Silicium-Scheibe, insb. Si(111)-Scheibe, ausgebildet ist.

**Claims**

**1.** Method for the photometric measurement of transmission or reflection within the field of detectable radiation on a test piece or a measuring object (3) in order to determine its optical characteristic using a photometer including optical arrangements of a light source (11), lenses (12, 61, 62), a chopper disc (13), a beam splitter (53), filters or grids (57, 58) as well as at least one detector (63, 64) and one detector signal amplifier (65, 66),
**characterized** in that
immediately at the output of each detector signal amplifier (65, 66), the measuring signal available thereat is converted from an analog to a digital form, and the transmission or reflection to be measured is then in an exclusively digital manner determined in two phases through numerical acquisition of maximum values in connection with average formation during at least two chopper periods, wherein in the first phase, when no test piece (3) has been put into the path of the measuring ray, the averaging interval is determined as the number of measuring points to be involved in the averaging process, and following the averaging of all measuring points, the acquisition of maximum values of the thus formed average values in view of making the unattenuated intensity a normalization value is terminated, and in that in the second phase, when a test object (3) has been put into the path of the measuring ray, the

7

attenuated intensity is determined on the basis of the equally effected averaging acquisition of maximum values, and the transmission or reflection to be determined is calculated in establishing a ratio to the normalization value obtained during the first phase.

2. Device for the photometric measuring of transmission or reflection in the field of detectable radiation on a test piece or measuring object (3) in order to determine or control the optical characteristic thereof,
said device having a photometer including optical arrangements of a light source (11), lenses (12, 61, 62), a chopper disc (13), a beam splitter (53), filters or grids (57, 58) as well as at least one detector (63, 64) and one detector signal amplifier (65, 66),
**characterized** in that
immediately downstream of each detector signal amplifier (65, 66) an analog-digital converter (70, 71) is provided and in that a process computer (75) is connected to him for determining the transmission or reflection on the basis of the digitised measuring signals, said processor determining the transmission or reflection to be measured in a numerical manner in two phases by numerical acquisition of maximum values in connection with average formation during at least two chopper periods, wherein in the first phase, when no test piece (3) has been put into the path of the measuring ray, the averaging interval is determined as the number of measuring points to be involved in the averaging process, and following the averaging of all measuring points, the acquisition of maximum values of the thus formed average values in view of making the unattenuated intensity a normalization value is terminated, and in that in the second phase, when a test object (3) has been put into the path of the measuring ray, the attenuated intensity is determined on the basis of the equally effected averaging acquisition of maximum values, and the transmission or reflection to be determined is calculated in establishing a ratio to the normalization value obtained during the first phase.

3. Device according to claim 2,
**characterized** in that
downstream of the test piece (3), the measuring ray (52) is subdivided into at least one more measuring ray (56) which, after passing through another filter (58) of a predetermined wave length ($\lambda_2$,) impinges each upon another detector (64) having an analog-digital converter (71) arranged immediately after it, to which the process computer (75) is connected.

4. Device according to claim 2 or 3,
**characterized** in that
for measuring in the range of infrared light, the detector (63) is constructed as an indium-arsenide photodiode.

5. Device according to claim 4,
**characterized** in that
the beam splitter (53) which is arranged in the path of the measuring ray upstream of the detector (63), is constructed as a silicon dice, preferably as a Si(111) dice.

**Revendications**

1. Procédé pour la mesure photométrique de la transmission ou de la réflexion dans le domaine des rayonnements détectables sur un échantillon ou un objet de mesure (3) afin de la détermination de sa caractéristique optique, en utilisant un photomètre comprenant un agencement optique d'une source lumineuse (11), de lentilles (12, 61, 62), d'un disque de chopper (13), d'un séparateur de faisceau (53), de filtres ou de grilles (57, 58), ainsi que, au moins, un détecteur (63, 64) et un amplificateur du signal de détecteur (65, 66),
procédé **caractérisé** en ce que
immédiatement à la sortie de chacun des amplificateurs du signal de détecteur (65, 66), le signal de mesure qui y est disponible est converti d'une forme analogique en une forme numérique, et en ce que la transmission ou la réflexion à mesurer est déterminée après d'une façon exclusivement numérique, en deux phases, par la saisie numérique de valeurs maximum conjointement avec la formation de moyennes pendant au moins deux périodes du chopper, cas dans lequel, dans la première phase, où l'échantillon (3) n'est pas encore placé dans le trajet du faisceau de mesure, l'intervalle pour la formation de moyennes est déterminé comme le nombre des points de mesure à tenir compte dans la formation de moyennes et, après la formation de moyennes de tous les points de mesure, on termine la saisie des valeurs maximum des moyennes ainsi formées en vue de déterminer l'intensité non atténuée comme une valeur de normalisation, et, dans la seconde phase, où l'échantillon (3) est placé dans le trajet du faisceau de mesure, on détermine l'intensité atténuée sur la base de la saisie, également effectuée, de valeurs maximum avec formation de moyennes, et on calcule la transmission ou la réflexion à déterminer en établissant la relation avec la valeur de normalisation obtenue dans la première phase.

2. Dispositif pour la mesure photométrique de la transmission ou de la réflexion dans le domaine des rayonnements détectables sur un échantillon ou objet de mesure (3) afin de la détermination ou du contrôle de sa caractéristique optique,
ledit dispositif comportant un photomètre comprenant un agencement optique d'une source lumineuse (11), de lentilles (12, 61, 62), d'un disque de chopper (13), d'un séparateur de faisceau (53), de filtres ou de grilles (57, 58) ainsi que, au moins, d'un détecteur (63, 64) et d'un amplificateur de signal de détecteur (65, 66),
ledit dispositif **caractérisé** en ce que,
immédiatement en aval de chaque amplificateur de signal de détecteur (65, 66), on a prévu un convertisseur analogiquenumérique (70, 71), et qu'un ordinateur pour processus industriels (75) y est relié pour la détermination de la transmission ou de la réflexion sur la base des signaux de mesure numérisés, ledit ordinateur déterminant la transmission ou la réflexion à déterminer d'une façon numérique, en deux phases, par la saisie numérique de valeurs maximum conjointement avec la formation de moyennes pendant au moins deux périodes du chopper, cas dans lequel, dans la première phase, où l'échantillon (3) n'est pas encore placé dans le trajet du faisceau de mesure, l'intervalle pour la formation de moyennes est déterminé comme le nombre des points de mesure à tenir compte dans la formation de moyennes et, après la formation de moyennes de tous les points de mesure, on termine la saisie des valeurs maximum des moyennes ainsi formées en vue de déterminer l'intensité non atténuée comme une valeur de normalisation, et, dans la seconde phase, où l'échantillon (3) est placé dans le trajet du faisceau de mesure, on détermine l'intensité atténuée sur la base de la saisie, également effectuée, de valeurs maximum avec formation de moyennes, et on calcule la transmission ou la réflexion à déterminer en établissant la relation avec la valeur de normalisation obtenue dans la première phase.

3. Dispositif selon la revendication 2,
**caractérisé** en ce que,
en aval de l'échantillon (3), le faisceau de mesure (52) est divisé pour former au moins un autre faisceau de mesure (56) qui, chaque fois, passe à travers un autre filtre (58) d'une longueur d'onde prédéterminée ($\lambda_2$) et est incident sur un autre détecteur (64) avec un convertisseur analogique-numérique (71) immédiatement placé en aval auquel l'ordinateur pour processus industriels (75) est relié.

4. Dispositif selon la revendication 2 ou 3,
**caractérisé** en ce que,
en vue de la mesure dans la plage de la lumière infrarouge, le détecteur (63) est conçu sous la forme d'une photodiode à l'arséniure d'indium.

5. Dispositif selon la revendication 4,
**caractérisé** en ce que
le séparateur de faisceau (53) qui est disposé dans le trajet du faisceau en amont du détecteur (63) est conçu sous la forme d'une pastille de silicium, plus particulièrement d'une pastille au Si(111).

EP 0 218 213 B1

51 52 53 55 57 59 61 63 65 70

3

$f_1$

12

11

0

H

14 13

2 4

6

5

$S_1$

$S_2$

$\lambda_1$

$\lambda_2$

$f_2$

$f_3$

$\frac{I}{U}$ $\frac{I}{U}$

$U_1$ $U_2$

A/D A/D

1

54 56 58 60 62 64 66

71 75

Fig.1

Fig. 2